# EUROPÄISCHE PATENTANMELDUNG

(11) **EP 2 626 327 A1**
(43) Veröffentlichungstag der Anmeldung: **14.08.2013**
(21) Anmeldenummer: 13000595.2
(22) Anmeldetag: 06.02.2013
(51) Int. Cl.: B66D 3/18, B66C 13/06, B66C 13/18, G01L 1/22, B66C 23/02

(54) **Verfahrbare Hubeinrichtung**

(30) Priorität: 10.02.2012 DE 102012002501; 08.06.2012 DE 202012005694 U
(71) Anmelder: Rinke Handling-Systems GmbH, 34355 Staufenberg (DE)
(72) Erfinder: Rinke, Otto, 34355 Staufenberg (DE)
(74) Vertreter: Walther, Walther & Hinz GbR

(57) **Zusammenfassung**

Gegenstand der Erfindung ist eine verfahrbare Hubeinrichtung (1), umfassend eine Hubsäule (10) mit einem an der Hubsäule (10) angeordneten entlang der Hubsäule (10) verfahrbaren Arm (30), wobei der Arm (30) eine Antriebseinrichtung (60) aufweist, wobei die Antriebseinrichtung (60) durch eine Bedieneinrichtung (40) ansteuerbar ist, wobei die Bedieneinrichtung (40) mindestens einen Kraftmessgeber aufweist,
wobei der Kraftmessgeber durch ein Betätigungselement (48) aktivierbar ist, wobei durch das Betätigungselement (48) entsprechend der auf das Betätigungselement (48) aufgebrachten manuellen Kraft ein Steuersignal an die Antriebseinrichtung (60) zur Einleitung einer Hebe- oder Senkbewegung des Arms (30) übermittelt wird.

## Beschreibung

Die Erfindung betrifft eine verfahrbare Hubeinrichtung, umfassend eine Hubsäule mit einem an der Hubsäule angeordneten, entlang der Hubsäule verfahrbaren Arm, wobei der Arm eine Antriebseinrichtung aufweist. Die Antriebseinrichtung befindet sich beispielsweise an der Hubsäule.

An dem Arm ist ein Lastanschlagmittel, z. B. ein Haken, angeordnet, der der Aufnahme einer Last dient. Zusammen mit dem Arm soll die Last angehoben oder abgesenkt werden, um diese z. B. in ein Regal einzulagern oder aus einem Regal zu entnehmen. Hierzu ist erforderlich, dass der Arm entlang der Hubsäule verfahrbar ist. Es reicht nicht aus, wenn beispielsweise nur das Lastanschlagmittel, also z. B. der Haken, in der Höhe verstellbar wäre, da dann keine Möglichkeit bestünde, mit dem Arm in ein Regal, z. B. ein Fachbodenregal, einzufahren, um dort eine Last zu entnehmen bzw. eine Last in das Regal einzulagern.

Insofern wäre denkbar, mittels einer üblichen Fernbedienung den Arm an der Hubsäule in der Höhe verstellbar zu gestalten. Da aber beispielsweise die Einlagerung von Lasten in ein Regal ein feinfühliges Anheben oder Absenken des Arms an der Hubsäule erfordert, insbesondere wenn die Fachböden eines Fachbodenregals nur einen geringen Abstand zueinander aufweisen, kommt das Bedienpersonal mit einer üblichen Fernsteuerung, wie sie beispielsweise von Kränen her bekannt ist, an seine Grenzen.

Die der Erfindung zugrunde liegende Aufgabe besteht demzufolge darin, den Arm in seiner Vertikalbewegung entlang der Hubsäule feinfühlig bewegen zu können.

Zur Lösung der Aufgabe dienen die Merkmale des kennzeichnenden Teils des Anspruchs 1. Hiernach ist vorgesehen, dass die Antriebseinrichtung durch eine Bedieneinrichtung ansteuerbar ist, wobei die Bedieneinrichtung mindestens einen am Arm angeordneten Kraftmessgeber aufweist, wobei der Kraftmessgeber durch ein am Arm angeordnetes Betätigungselement aktivierbar ist, wobei durch das Betätigungselement entsprechend der auf das Betätigungselement aufgebrachten manuellen Kraft ein Steuersignal an die Antriebseinrichtung zur Einleitung einer Hebe- oder Senkbewegung des Armes übermittelt wird. Die Antriebseinrichtung umfasst einen Seiltrieb und einen Antriebsmotor, insbesondere einen Elektromotor, wobei das Seil des Seiltriebs die Verbindung zwischen Arm und Motor bildet. Hierbei kann der Motor ein Getriebe mit einer Seilrolle für das Seil des Seiltriebs oder auch einen Spindelhubtrieb aufweisen.

Nach einem besonderen Merkmal der Erfindung ist vorgesehen, dass der Kraftmessgeber als Biegebalken oder Biegestab mit mindestens einem Dehnungsmessstreifen ausgebildet ist, wobei der Biegebalken oder Biegestab durch das Betätigungselement auslenkbar ist. Dehnungsmessstreifen haben gegenüber z. B. Piezokristallen als Kraftmessgeber den großen Vorteil, dass das Signal konstant bleibt. Bei Verwendung von Piezokristallen als Kraftmessgeber ist dies nicht gewährleistet. Bei Einwirkung einer statischen Kraft auf einen Piezokristall führt dies zu einer definierten Ladungsmenge an der Oberfläche des piezoelektrischen Materials. Hierbei gilt grundsätzlich, dass, wenn diese Ladung nicht mit einem Ladungsverstärker, sondern mit einem Impedanzwandler gemessen wird, kontinuierlich Ladung verloren geht, was letztlich zu einem kontinuierlichen Signalabfall führt. Es entsteht insofern ein sägezahnförmiger Verlauf des Steuersignales. Um einen solchen sägezahnförmigen Verlauf des Steuersignales auszugleichen, sind relativ komplizierte elektrische Schaltungen erforderlich. Dehnungsmessstreifen haben gegenüber Piezokristallen den großen Vorteil, dass das Signal konstant bleibt. Das bedeutet aber auch, dass die Schaltungselektronik niederohmig ausgeführt werden kann. Es reicht somit der Einsatz einfacher Verstärkerschaltungen aus. Auch die elektrische Störsicherheit ist insofern sehr hoch, was den Einsatz der üblichen Sensorkabel ermöglicht.

Vorteilhafte Merkmale und Ausgestaltungen der Erfindung ergeben sich aus den weiteren Unteransprüchen.

So ist nach einem Merkmal der Erfindung insbesondere vorgesehen, dass das Betätigungselement am Arm, insbesondere in vertikaler Richtung, relativ zum Arm verschieblich am Arm angeordnet ist. Dadurch, dass das Betätigungselement unmittelbar am Arm angeordnet ist, ist eine intuitive Verstellung des Armes möglich, was die genaue Justierung des Armes in der Höhe relativ zur Hubsäule erleichtert.

Der Arm selbst weist mehrere vertikal ausgerichtete Knickgelenke, insbesondere zwei Knickgelenke auf, so dass der Arm horizontal um die Knickgelenke verschwenkbar ist. Vorteilhaft ist der Arm darüber hinaus über ein weiteres, vertikal ausgerichtetes Gelenk mit der Hubsäule, insbesondere mit einem an der Hubsäule angeordneten verfahrbaren Schlitten verbunden. Das heißt, dass der Arm nicht nur in der Höhe sehr feinfühlig ausjustiert werden kann, sondern darüber hinaus auch nach Erreichen einer bestimmten Höhe durch die Knickgelenke mit seinem Lastanschlagmittel, z. B. dem Haken, durch horizontales Verschwenken an die gewünschte Position gebracht werden kann. Zur Manipulation des Armes in horizontaler Richtung ist insbesondere ein Griff vorgesehen, der am Arm angelenkt ist, und der bevorzugt mit dem Betätigungselement in Verbindung steht. Das bedeutet, dass dann, wenn der Griff von der Hand des Bedieners erfasst wird, beispielsweise mit dem Daumen, das Betätigungselement betätigbar ist, und zwar in dem Sinne, dass durch den Daumen das Betätigungselement nach oben oder nach unten verschieblich ist. Das heißt, dass mit einer Hand nicht nur eine horizontale Positionierung, sondern auch eine vertikale Positionierung des Armes an der Hubsäule möglich ist.

Es wurde bereits darauf hingewiesen, dass die Bedieneinrichtung einen Biegebalgen umfasst. In diesem Zusammenhang ist nach einem weiteren Merkmal im Einzelnen vorgesehen, dass der Arm einen Träger aufweist, wobei der Träger den Biegebalken beabstandet zum Träger endseitig eingespannt aufnimmt, wobei das Betätigungselement durch einen Stift, insbesondere einen Gewindestift mit der dem eingespannten Ende gegenüberliegenden Ende des Biegebalkens in Verbindung steht, wobei bei Bewegung des Betätigungselementes in vertikaler Richtung der Blegebalken auslenkbar ist. Das heißt, der Träger nimmt den Biegebalken horizontal verlaufend und beabstandet zum Träger auf. An einem Ende ist der Biegebalken eingespannt auf dem Träger angeordnet. Am anderen, gegenüberliegenden Ende steht der Biegebalken durch den senkrecht zum Biegebalken verlaufenden Stift mit dem Betätigungselement in Verbindung. Bei Auslenkung des Biegebalkens, der auch als Biegestab ausgebildet sein kann, wird eine entsprechende Kraft auf den Dehnungsmessstreifen ausgeübt, der sich am Biegebalken befindet, was zur Folge die Auslösung eines elektrischen Signals hat, das als Steuersignal, gegebenenfalls über eine Verstärkerschaltung dem Antriebsmotor der Antriebseinrichtung zugeleitet wird, und diesen veranlasst, das Seil auf die Seiltrommel aufzurollen oder von dieser abzurollen. Gleiches gilt sinngemäß bei Verwendung einer Kette anstelle eines Seiles. Hiermit kann eine nahezu weglose Krafteinleitung erfolgen, was eine sehr feinfühlige Handhabung ermöglicht. Auch ist der Verschleiß der Bedieneinrichtung aufgrund der nahezu weglosen Krafteinleitung im Wesentlichen vernachlässigbar.

Im Einzelnen weist des Weiteren das Betätigungselement im Übergang zum Träger einen Teller auf, durch den der Stift mit dem Biegebalken in Verbindung steht. Das heißt, der Stift stellt das Übertragungsglied zwischen dem Betätigungselement einerseits und dem Biegebalken dar, der, wie bereits ausgeführt, an dem dem Stift gegenüberliegenden Ende eingespannt mit dem Träger verbunden ist. Der Biegebalken selbst verläuft nach der Einspannung in Richtung zu dem Stift parallel beabstandet zum Träger, um Raum für die vertikale Auslenkung des Biegebalkens bereitstellen zu können.

Als besonders vorteilhaft hat sich eine Ausbildung des Biegebalkens herausgestellt, bei dem der Biegebalken mindestens vier Gelenke aufweist, die durch sogenannte Dünnstellen unterhalb des Dehnungsmessstreifens im Biegebalken gebildet sind. Wenn vier Dünnstellen in der Anordnung eines Rechtecks oder Quadrats im Biegebalken angeordnet sind, also jeweils zwei Dünnstellen einander gegenüberliegen, ergibt sich hieraus ein sogenanntes Gelenkviereck.
Die Einbringung der Dünnstellen im Biegebalken wird dadurch vorgenommen, dass eine Ausnehmung in Form einer liegenden Acht im Biegebalken geschaffen wird. Das heißt, die Ausnehmung ist im Wesentlichen aus zwei Bohrungen ausgebildet, die ineinandergreifen, d. h. ineinander übergehen, also die Bohrungen untereinander verbunden sind. Im Bereich der oberen und der unteren Scheitelpunkte befinden sich als Dünnstellen die jeweiligen Gelenke, insgesamt also vier Gelenke, die das Gelenkviereck bilden. Das heißt, dort wo der Biegebalken den geringsten Querschnitt aufweist, wird der Dehnungsmessstreifen (DMS) angeordnet, somit befindet sich über den Dünnstellen der DMS. Ein solches Gelenkviereck hat den Vorteil, dass egal wie die Kraft zur Auslenkung des Biegebalkens angreift, dies aufgrund der parallelen Führung durch das Gelenkviereck keine Auswirkung auf die Größe der Auslenkung des Biegebalkens hat.

Im vorliegenden Fall bedeutet dies Folgendes:
Das Betätigungselement ist hülsenförmig ausgebildet. Das hülsenförmig ausgebildete Betätigungselement steht in Verbindung mit dem Griff. Der Griff selbst ist durch einen Verbindungsstab an dem Arm angelenkt. Auf dem Verbindungsstab lagert das Betätigungselement, das, wie bereits ausgeführt, hülsenförmig ausgebildet ist. Das Betätigungselement ist insofern relativ zum Verbindungsstab verschieblich auf dem Verbindungsstab angeordnet. Das hat zur Folge, dass sich die Richtung der Krafteinleitung auf den Biegebalken durch beispielsweise Verschwenken des Griffes verändern kann, wenn gleichzeitig durch das Betätigungselement der Biegebalken ausgelenkt wird. Dadurch nun, dass die vier Dünnstellen als Gelenke in den Biegebalken eingebracht sind, wird ein durch eine Änderung der Richtung der Krafteinleitung in dem Biegebalken erzeugtes Moment kompensiert. Dies führt schlussendlich dazu, dass die Bedieneinrichtung insgesamt, egal wie der Kraftangriff auf den Biegebalken ist, im Wesentlichen immer in gleicher Weise reagiert. Das heißt, dass die Steuersignale bei gleicher Kraft aber zum Beispiel unterschiedlicher Angriffsrichtung zu einer im Wesentlichen immer gleichen Hub- oder Senkbewegung führen. Dies hat schlussendlich zur Folge, dass der Griff in Kombination mit dem Betätigungselement an dem Arm angeordnet sein kann. Dies wiederum hat zur Folge, dass hierdurch der Arm sowohl in horizontaler Richtung als auch sehr feinfühlig in vertikaler Richtung mit einer Hand manipulierbar ist.

Am Arm hängt endseitig die Last. Üblicherweise findet die Manipulation über den Griff bzw. das Betätigungselement statt. Es kann nun aber der Fall eintreten, dass insbesondere bei fragilen Lasten oder aus welchen Gründen auch immer die Manipulation der Last unmittelbar am Arm stattfinden soll. Das heißt konkret, dass durch Anheben oder Ablenken des Arms ein entsprechendes Steuersignal an den Elektromotor der Antriebseinrichtung übermittelt wird. Die Antriebseinrichtung umfasst nicht nur einen Elektromotor, sondern insbesondere ein daran angeflanschtes Getriebe mit einer Seiltrommel zur Aufnahme des Seiles. Um auch hier ein entsprechendes Steuersignal zu generieren, ist vorgesehen, dass z. B. das Seil des Seilzugs eine Dehnungsmesszelle oder auch Wiegezelle aufweist, die mit bestimmten Kraftmessbereichen käuflich zu erwerben sind.

Um Ungenauigkeiten durch Materialkriechen und andere Effekte zu kompensieren ist vorgesehen, die Bedieneinrichtung in bestimmten zeitlichen Abständen auf Null abzugleichen.

Die verfahrbare Hubeinrichtung ist vorteilhaft motorisch angetrieben. Das heißt, dass die Hubeinrichtung einen Antriebsmotor für ein Räderpaar aufweist. Das andere Räderpaar, insbesondere das am vorderen Ende der Hubeinrichtung angeordnete Räderpaar, ist derart ausgebildet, dass die einzelnen Räder um ihre vertikale Achse verschwenkbar sind, sodass die gesamte verfahrbare Hubeinrichtung auf der Stelle drehbar ist.

Der Arm ist mittels eines Schlittens an der Hubsäule verfahrbar angeordnet.

Zur Führung des Schlittens an der Hubsäule ist mindestens eine Schwalbenschwanzführung vorgesehen, vorzugsweise allerdings zwei parallel zueinander verlaufende Schwalbenschwanzführungen, wobei die Schwalbenschwanzführung über Wälzkörper verfügt, um ein möglichst verschleiß- und ruckfreies Verfahren des Schlittens an der Hubsäule zu ermöglichen.

Nach einem weiteren Merkmal der Erfindung ist die Hubsäule außermittig auf der verfahrbaren Hubeinrichtung angeordnet, so dass wegen des größeren Hebelarms zumindest zu einer Seite der Hubeinrichtung durch den Arm ein größeres Gewicht als zur anderen Seite aufgenommen werden kann. Nicht nur für den Antrieb des Schlittens an der Hubsäule ist elektrische Energie erforderlich, sondern zum Verfahren der Hubeinrichtung. Insofern ist ein Batteriespeicher vorgesehen, der auf der Hubeinrichtung angeordnet ist. Der Batteriespeicher sorgt für zusätzliches Gewicht, was positiv in Bezug auf die anzuhebenden Lasten ist.
- Fig. 1: zeigt die verfahrbare Hubeinrichtung in perspektivischer Darstellung;
- Fig. 2: im Schnitt schematisch die Anlenkung des Schlittens für den Arm an der Hubsäule;
- Fig. 3: zeigt die Bedieneinrichtung in vergrößerter Darstellung;
- Fig. 4: zeigt den Biegebalken in vergrößerter Darstellung;
- Fig. 5: zeigt ein Ersatzschaubild des Biegebalkens.
- Fig. 6: zeigt einen Ausschnitt des Seiltriebes mit der im Seil des Seiltriebs angeordneten Dehnungsmesszelle als Teil der Antriebseinrichtung.

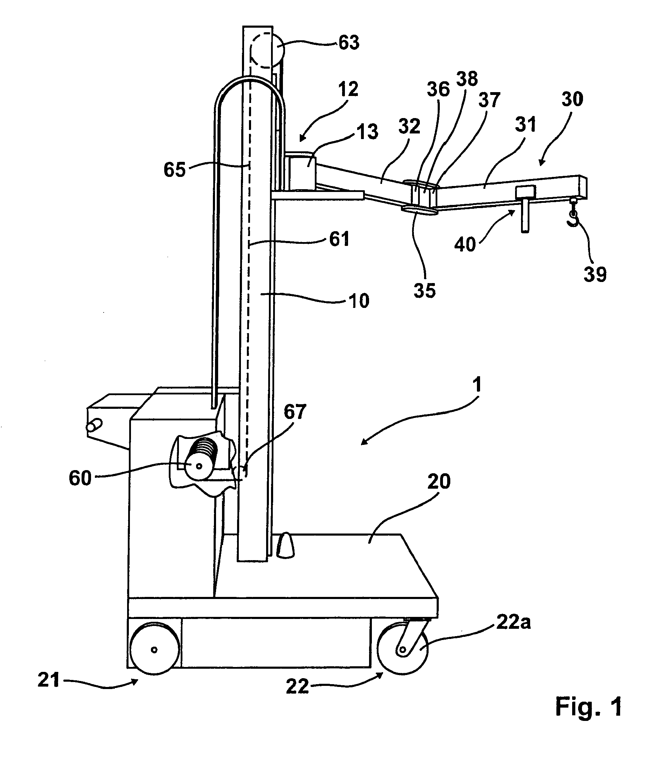

Die gemäß Fig. 1 mit 1 bezeichnete Hubeinrichtung umfasst eine Hubsäule 10, die auf einem Tisch 20 der Hubeinrichtung lagert. Der Tisch 20 nimmt zwei Räderpaare 21, 22 auf, wobei das Räderpaar 21 mit einem motorischen Antrieb (nicht dargestellt) in Verbindung steht, und wobei die Räder 22a des Räderpaares 22 um eine vertikale Achse verdrehbar an den Tisch 20 der Hubeinrichtung angeordnet sind. Hierdurch wird erreicht, dass die Hubeinrichtung auf der Stelle drehen kann.

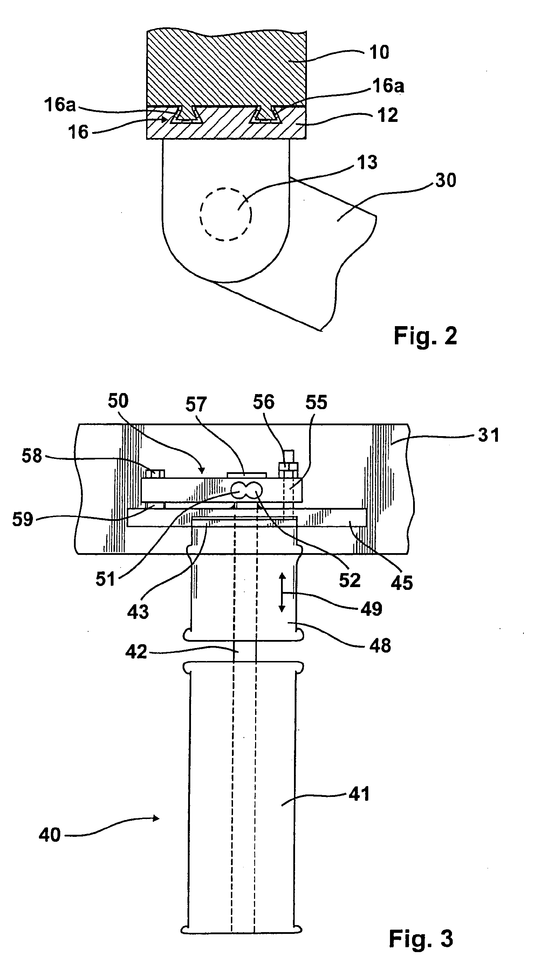

Die Hubsäule 10 nimmt durch den mit 12 bezeichneten Schlitten den insgesamt mit 30 bezeichneten Arm auf (Fig. 2). Die Verbindung zwischen dem Schlitten 12 und dem Arm 30 erfolgt über ein vertikal ausgerichtetes Knickgelenk 13, so dass der Arm horizontal verschwenkbar ist. Der Arm 30 umfasst zwei Armglieder 31 und 32, die durch ein Doppelgelenk 35 miteinander verbunden sind. Das Doppelgelenk 35 umfasst zwei vertikal ausgerichtete Gelenke 36, 37, die durch ein Verbindungsglied 38 miteinander in Verbindung stehen. Durch die insgesamt drei vertikal ausgerichteten Gelenke 13, 36 und 37 wird erreicht, dass der Arm in horizontaler Richtung nahezu jede beliebige Lage einnehmen kann. Das Armglied 31 zeigt darüber hinaus endseitig das Anschlagmittel 39 zum Anhängen der Last sowie die Bedieneinrichtung 40.

Die Ausbildung der Bedieneinrichtung 40 ergibt sich in Anschauung von Fig. 3. Hierbei ist ein Griff 41 vorgesehen, wobei der Griff 41 über einen Verbindungsstab 42 mit einem am Armglied 31 angeordneten Träger 45 in Verbindung steht. Der Träger 45 nimmt endseitig eingespannt den mit 50 bezeichneten Biegebalken auf. Der Biegebalken 50 verläuft beabstandet (Abstand X) und parallel zum Träger 45. Die Einspannung des Biegebalkens 50 erfolgt durch die Schraube 58 in Verbindung mit der Unterlegscheibe 59 auf dem Träger 45.

Auf dem Verbindungsstab 42 lagert das Betätigungselement 48. Das Betätigungselement 48 ist entsprechend dem Doppelpfeil 49 durch den Verbindungsstab relativ zum Verbindungsstab 42 verschieblich von dem Verbindungsstab aufgenommen. Am oberen Ende weist das Betätigungselement 48 einen Teller 43 auf, wobei der Teller 43 den Gewindestift 55 aufnimmt, der mit dem Biegebalken 50 in Verbindung steht. Es wurde bereits darauf hingewiesen, dass der Biegebalken mit den Abstand X beabstandet und parallel zum Träger 45 verläuft. Der Stift 55, der als Gewindestift ausgebildet ist, weist endseitig eine Mutter 56 auf, mit der der Biegebalken 50 gegen den am Betätigungselement 48 angeordneten Teller vorgespannt ist. Wird nun das Betätigungselement 48 in der Bildebene nach oben verschoben, dann bewegt sich der Biegebalken aufgrund seiner Vorspannung in Richtung der Bewegung des Betätigungselementes 48 ebenfalls nach oben. Entsprechendes gilt, wenn das Betätigungselement 48 in der Bildebene entsprechend dem Doppelpfeil 49 nach unten bewegt wird.

Auf der Oberseite des Biegebalkens befindet sich der Dehnungsmessstreifen 57. Der Dehnungsmessstreifen 57 sorgt für die Erzeugung eines Steuersignals, das über eine Verstärkerschaltung dem Elektromotor der Antriebseinrichtung 60 übermittelt wird, was dort zu einer rotatorischen Bewegung des Motors mit der angeschlossenen Seiltrommel führt, mithin das Auf- oder Abrollen des Seiles 65 des Seiltriebes 61 bewirkt. Der Seiltrieb 61 der Antriebseinrichtung für das Anheben oder Absenken des Arms umfasst nicht nur das Seil 65, sondern darüber hinaus auch die Umlenkrolle 63, die am oberen Ende der Hubsäule angeordnet ist, sowie eine weitere Umlenkrolle 67 im Bereich des unteren Endes der Hubsäule 10. Durch die Seiltrommel mit dem Elektromotor auf dem Hubtisch der Hubeinrichtung wird das Seil des Seiltriebs aufgenommen.

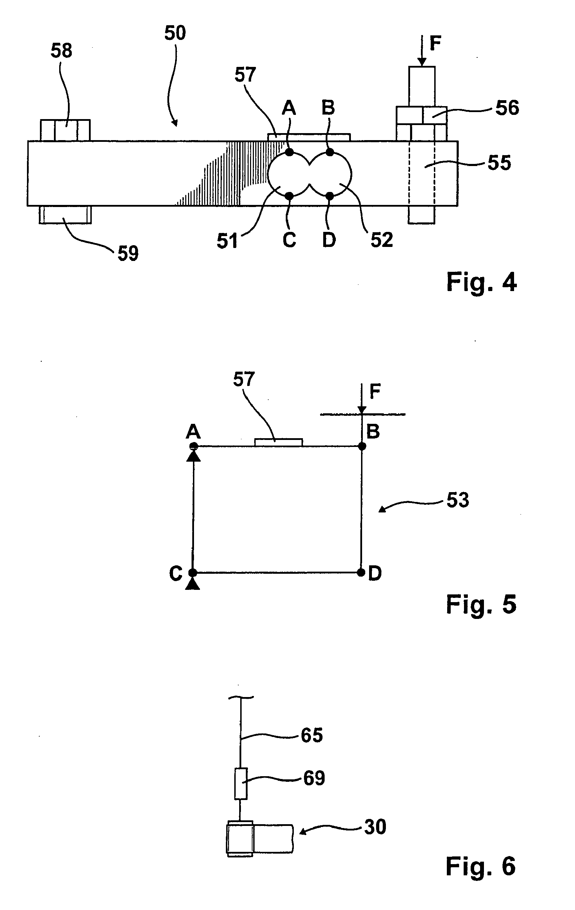

Wie der Fig. 3 zu entnehmen ist, weist der Biegebalken 50 zwei quer zur Längsachse des Biegebalkens angeordnete, durchgehende Bohrungen auf, die ineinander übergehen, und insbesondere nach Art einer liegenden "Acht" ausgebildet sind. Die beiden Bohrungen verlaufen unterhalb des Dehnungsmessstreifens im Balken, aber außerhalb des Kraftangriffs durch den Gewindestift. Durch die beiden Bohrungen 51, 52 findet eine Verjüngung des Querschnitts des Biegebalkens 50 an vier Stellen A bis D statt. Diese Stellen A bis D werden auch als Dünnstellen bezeichnet. Diese Dünnstellen bilden jeweils ein Gelenk, sodass, wie sich dies aus Fig. 5 ergibt, vom Grundsatz her ein Gelenkviereck 53 bildet. Hierbei ist es dann gleich, in welcher Weise die Kraft F durch den Gewindestift 55 auf dieses Gelenkviereck wirkt, denn es wird, wie bereits ausgeführt, ein Drehmoment, das dadurch realisiert wird, dass die Kraft F nicht genau in der Flucht von dem Gelenk B eingeleitet wird, durch das Gelenkviereck kompensiert. Der Dehnungsmessstreifen 57 findet sich hierbei auf dem Biegebalken über den Dünnstellen A und B.

Der Arm 30 ist durch den Schlitten 12 an der Hubsäule 10 angelenkt (Fig. 2). Zur Verbindung der Hubsäule 10 mit dem Schlitten 12 sind zwei parallel zueinander verlaufende Schwalbenschwanzführungen 16 vorgesehen, wobei im Bereich einer jeweiligen Schwalbenschwanzführung 16 Wälzkörper 16a angeordnet sind, um ein ruckfreies und verschleißfreies Verfahren des Schlittens entlang der Hubsäule zu ermöglichen.

Wie sich aus der vereinfachten Darstellung gemäß Fig. 6 ergibt, weist das Seil 65 des Seiltriebes 61 eine Dehnungsmesszelle oder Wiegezelle 69 auf, die ebenfalls durch eine Verstärkerverschaltung mit dem Elektromotor der Antriebseinrichtung 60 in Verbindung steht. Solche Dehnungsmesszellen oder Wiegezellen sind käuflich zu erwerben. Wird nun der Arm unmittelbar angehoben, so wird, ganz ähnlich wie beim Verschieben des Betätigungselementes nach oben oder nach unten (Doppelpfeil 49) ein entsprechendes Steuersignal an den Elektromotor der Antriebseinrichtung 60 übermittelt, der z. B. für ein Aufrollen des Seiles auf die Seilrolle der Antriebseinrichtung 60 sorgt. Umgekehrt wird das Seil 65 von der Seilrolle der Antriebseinrichtung 60 abgerollt, wenn der Arm durch das Bedienpersonal leicht nach unten bewegt wird.

### Bezugszeichenliste:

- 1: Hubeinrichtung
- 10: Hubsäule
- 12: Schlitten
- 13: Knickgelenk
- 16: Schwalbenschwanzführungen
- 16a: Walzkörper
- 20: Tisch
- 21: Räderpaar (angetrieben)
- 22: Räderpaar
- 22a: Räder
- 30: Arm
- 31: Armglieder
- 32: Armglieder
- 35: Doppelgelenk
- 36: Gelenk
- 37: Gelenk
- 38: Verbindungsglied zwischen Gelenk 36 und 37
- 39: Anschlagmittel
- 40: Bedieneinrichtung
- 41: Griff
- 42: Verbindungsstab
- 43: Teller
- 45: Träger
- 48: Betätigungselement
- 49: Doppelpfeil
- 50: Biegebalken
- 51: Bohrung
- 52: Bohrung
- 53: Gelenkviereck
- 55: Stift
- 56: Mutter
- 57: Dehnungsmessstreifen
- 58: Schraube
- 59: Unterlegscheibe
- 60: Antriebseinrichtung
- 61: Seiltrieb
- 63: Umlenkrolle
- 65: Seil
- 67: Umlenkrolle
- 69: Wiegezelle, Dehnungsmesszelle
- A, B, C, D: Gelenke im Biegebalken

## Patentansprüche

1. Verfahrbare Hubeinrichtung (1), umfassend eine Hubsäule (10) mit einem an der Hubsäule (10) angeordneten entlang der Hubsäule (10) verfahrbaren Arm (30),
wobei der Arm (30) eine Antriebseinrichtung (60) aufweist,
**dadurch gekennzeichnet,**
**dass** die Antriebseinrichtung (60) durch eine Bedieneinrichtung (40) ansteuerbar ist, wobei die Bedieneinrichtung (40) mindestens einen Kraftmessgeber aufweist,
wobei der Kraftmessgeber durch ein Betätigungselement (48) aktivierbar ist, wobei durch das Betätigungselement (48) entsprechend der auf das Betätigungselement (48) aufgebrachten manuellen Kraft ein Steuersignal an die Antriebseinrichtung (60) zur Einleitung einer Hebe- oder Senkbewegung des Arms (30) übermittelt wird.

2. Verfahrbare Hubeinrichtung (1) nach Anspruch 1,
**dadurch gekennzeichnet,**
**dass** der Kraftmessgeber als Biegebalken (50) mit mindestens einem Dehnungsmessstreifen (57) ausgebildet ist, wobei der Biegebalken (50) durch das Betätigungselement (48) auslenkbar ist.

3. Verfahrbare Hubeinrichtung (1) nach Anspruch 1,
**dadurch gekennzeichnet,**
**dass** das Betätigungselement (48) am Arm (30) angeordnet ist.

4. Verfahrbare Hubeinrichtung (1) nach Anspruch 3,
**dadurch gekennzeichnet,**
**dass** das Betätigungselement (48) in vertikaler Richtung relativ zum Arm (30) verschieblich ist.

5. Verfahrbare Hubeinrichtung (1) nach einem der voranstehenden Ansprüche,
**dadurch gekennzeichnet,**
**dass** das Betätigungselement (48) mit einem Griff (41) in Verbindung steht.

6. Verfahrbare Hubeinrichtung (1) nach einem der voranstehenden Ansprüche,
**dadurch gekennzeichnet,**
**dass** der Arm (30) einen Träger (45) aufweist, wobei der Träger (45) den Biegebalken (50) beabstandet zum Träger (45) endseitig eingespannt aufnimmt, wobei das Betätigungselement (48) durch einen Stift (55) mit der dem eingespannten Ende gegenüberliegenden Ende des Biegebalkens (50) in Verbindung steht, wobei bei Bewegung des Betätigungselements (48) in vertikaler Richtung der Biegebalken (50) auslenkbar ist.

7. Verfahrbare Hubeinrichtung (1) nach einem der voranstehenden Ansprüche,
**dadurch gekennzeichnet,**
**dass** der Biegebalken (50) mindestens vier Gelenke A, B, C, D aufweist, die durch Dünnstellen im Biegebalken (50) gebildet sind.

8. Verfahrbare Hubeinrichtung (1) nach Anspruch 7,
**dadurch gekennzeichnet,**
**dass** vier Dünnstellen in dem Biegebalken (50) vorgesehen sind, wobei jeweils zwei Dünnstellen einander gegenüberliegen, sodass sich ein Gelenkviereck (53) ergibt.

9. Verfahrbare Hubeinrichtung (1) nach einem der voranstehenden Ansprüche,
**dadurch gekennzeichnet,**
**dass** das Seil (65) des Seiltriebes (61) zum Anheben und Absenken des Arms (30) eine Dehnungsmesszelle (69) aufweist.

10. Verfahrbare Hubeinrichtung (1) nach einem der voranstehenden Ansprüche,
**dadurch gekennzeichnet,**
**dass** der Biegebalken (50) als Biegestab ausgebildet ist.

11. Verfahrbare Hubeinrichtung (1) nach einem der voranstehenden Ansprüche,
**dadurch gekennzeichnet,**
**dass** die verfahrbare Hubeinrichtung (1) motorisch angetrieben ist.

12. Verfahrbare Hubeinrichtung (1) nach einem der voranstehenden Ansprüche,
**dadurch gekennzeichnet,**
**dass** die verfahrbare Hubeinrichtung (1) einen Energiespeicher, insbesondere zur Speicherung von elektrischer Energie, aufweist.

13. Verfahrbare Hubeinrichtung (1) nach einem der voranstehenden Ansprüche,
**dadurch gekennzeichnet,**
**dass** die verfahrbare Hubeinrichtung (1) zwei Räderpaare (21, 22) umfasst, wobei die Räder (22a) zumindest eines Räderpaares (22) um eine vertikale Achse verdrehbar an der Hubeinrichtung (1) angeordnet sind, so dass die Hubeinrichtung (1) auf der Stelle drehen kann.

14. Verfahrbare Hubeinrichtung (1) nach einem der voranstehenden Ansprüche,
**dadurch gekennzeichnet,**
**dass** der Arm (30) mehrere vertikal ausgerichtete Knickgelenke (13, 36, 37) insbesondere zwei Knickgelenke aufweist.

15. Verfahrbare Hubeinrichtung (1) nach einem der voranstehenden Ansprüche,
**dadurch gekennzeichnet,**
**dass** der Arm (30) durch einen an der Hubsäule (10) angeordneten Schlitten (12) mit der Hubsäule (10) verbunden ist.

16. Verfahrbare Hubeinrichtung (1) nach Anspruch 15,
**dadurch gekennzeichnet,**
**dass** der Arm (30) durch ein vertikal ausgerichtetes Gelenk (13) mit dem Schlitten (12) verbunden ist.

17. Verfahrbare Hubeinrichtung (1) nach Anspruch 15 oder 16,
**dadurch gekennzeichnet,**
**dass** der Schlitten durch mindestens eine Schwalbenschwanzführung (16) an der Hubsäule (10) verschieblich angeordnet ist.

18. Verfahrbare Hubeinrichtung (1) nach einem der voranstehenden Ansprüche,
**dadurch gekennzeichnet,**
**dass** die Hubsäule (10) außermittig auf der verfahrbaren Hubeinrichtung (1) angeordnet ist.
